Europäisches Patentamt

European Patent Office

Office européen des brevets

(11) Publication number: **0 298 665**
**A2**

## (12) EUROPEAN PATENT APPLICATION

(21) Application number: 88305983.4

(22) Date of filing: 29.06.88

(51) Int. Cl.⁴: **F16N 7/40 , F16N 39/02**

(30) Priority: 06.07.87 JP 103483/87

(43) Date of publication of application:
**11.01.89 Bulletin 89/02**

(84) Designated Contracting States:
**DE GB**

(71) Applicant: **TOYOTA JIDOSHA KABUSHIKI KAISHA**
**1, Toyota-cho Toyota-shi**
**Aichi-ken 471(JP)**

(72) Inventor: **Yoshii, Kinya**
**4-48, Heiwa-cho**
**Toyota-shi Aichi-ken(JP)**
Inventor: **Katayama, Nobuaki**
**1-186, Taraike Ryujin-cho**
**Toyota-shi Aichi-ken(JP)**
Inventor: **Takimura, Keisuke**
**3-21-14, Suigen-cho**
**Toyota-shi Aichi-ken(JP)**
Inventor: **Yasuda, Mitsuyoshi**
**5-9-13, Itsutsugaoka**
**Toyota-shi Aichi-ken(JP)**

(74) Representative: **Ben-Nathan, Laurence Albert et al**
**Urquhart-Dykes & Lord 91 Wimpole Street London W1M 8AH(GB)**

(54) **Forced-feed lubricating system with oil cooler.**

(57) In a forced-feed lubricating system for feeding oil discharged from an oil pump (1) pneumatically to a lubrication circuit after cooling in an oil cooler (2), the invention comprises connecting an oil inlet of oil cooler (2) and an oil outlet through a by-pass circuit (11,12) and interposing in the by-pass circuit a by-pass valve (13) adapted to open when an oil pressure in the oil cooler drops to a predetermined value or below.

FIG. 1

## FORCED-FEED LUBRICATING SYSTEM WITH OIL COOLER

### BACKGROUND OF THE INVENTION

#### Field of the Invention

This invention relates to a lubricating system for lubricating car engine, transmission and others, and is particularly concerned with a forced-feed lubricating system with oil cooler for feeding oil discharged from an oil pump pneumatically to a lubrication circuit through cooling on an oil cooler.

#### Description of the Prior Art

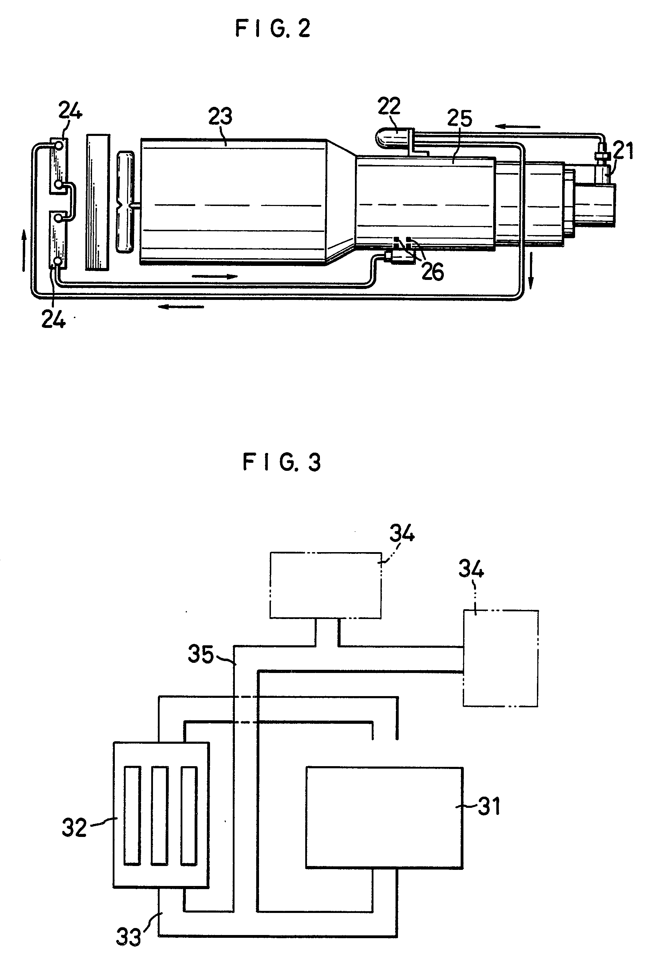

A forced-feed lubricating system of this kind is exemplified in Japanese Utility Model Laid-Open No. 3057/1984. As shown in Fig. 2, the system disclosed therein has a series oil lubrication circuit wherein oil from an oil pump 21 is guided to oil coolers 24, 24 ahead of an engine 23 by way of an oil filter 22, the oil thus cooled down is guided to a transmission case 25 in the rear of the engine 23 and injected to a lubrication circuit (gear tooth surface, bearing part and others) in the case 25, the oil is recovered from a bottom portion of the case and returned to the oil pump 21. Since oil can be kept at low temperature all the time by the oil cooler 24, such system is advantageous that an engine performance can be enhanced from cooling down the lubrication circuit efficiently.

However, a problem inherent in the prior art system described above is that a flow resistance of oil in the oil cooler 24 increases according as the viscosity thickens in the cold season, and thus a flow rate of oil passing through the oil cooler 24 decreases to incur a deterioration of lubricating efficiency. Then, in the cold season, oil freezes in the oil cooler 24 to an inability of forced-feed lubrication, and thus a fatal fault such as seizure or the like is capable of arising on a lubrication circuit.

As a countermeasure to cope with the situation mentioned above, it is conceivable as shown, for example, in Fig. 3 that the discharge side of an oil pump 31 is branched to provide in parallel a first circuit 33 passing through an oil cooler 32 and a second circuit 35 passing through a lubrication circuit 34, and oil having passed through the oil cooler 32 is intended for cooling down the lubricating oil indirectly. According to the aforementioned system, even if an oil viscosity thickens in the cold season and a flow rate of the oil passing through the oil cooler 33 decreases, a predetermined lubricating performance may be secured by the oil flowing in the second circuit 35. In this case, however, the oil is apt to flow to the second circuit on a flow resistance of the oil cooler 32, and a satisfactory cooling effect may not be expected when necessary (at the time of high temperature) along with a shortage of cooling ability due to the indirect cooling. In addition, since an oil flow rate required for the lubrication circuit 34 at all times and an oil flow rate to be fed to the oil cooler 32 must be secured, the large type oil pump 31 will be required to increase a power loss.

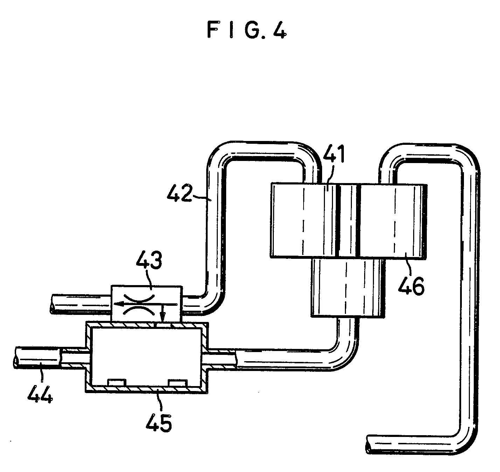

On the other hand, as shown in Fig. 4, an oil hydraulic circuit wherein a flow priority valve 43 for feeding a fixed quantity of pressure oil is interposed in a piping 42 connecting an oil pump 41 and a hydraulic system (not indicated), a surplus oil is returned to a confluence chamber 45 in a suction pipe 44 from the flow priority valve 43 is disclosed in Japanese Utility Model Laid-Open No. 15056/1986, and thus there is a conception that a quantity of the oil flowing to the oil cooler 32 (Fig. 3) will be secured by, for example, interposing such flow priority valve 43 in a junction in the aforementioned circuit shown in Fig. 3 (reference numeral 46 in Fig. 4 denoting an oil pump for another hydraulic system). In this case, however, a shortage of cooling ability due to the direct cooling and a large-size requirement of the oil pump are still not avoidable, and hence a radical solution has not yet been reached.

### SUMMARY OF THE INVENTION

An object of the invention is to provide a forced-feed lubricating system with oil cooler capable of lubricating and cooling a lubrication circuit efficiently covering full temperature limits.

In order to attain the aforementioned object, in a forced-feed lubricating system for feeding oil discharged from an oil pump pneumatically to a lubrication circuit through cooling on an oil cooler, the invention comprises connecting an oil inlet of oil cooler and an oil outlet through a by-pass circuit, interposing a by-pass valve opening when an oil pressure in the oil cooler drops to a predetermined value or over in the by-pass circuit.

In the invention, the aforementioned oil pump is not necessarily limited to a specific kind, but various gear pumps such as external gear pump, internal gear pump, trochoid pump and the like, and moreover vane pump may be used therefor.

Further in the invention, the aforementioned bypass circuit may be provided through an oil pump body. In this case, however, it is desirable that the aforementioned bypass valve be incorporated in the body, thereby simplifying the system generally.

Still further, in the invention, the aforementioned bypass valve may comprise a ball valve and a spring for energizing the ball valve in the direction close normally.

In the above-described forced-feed lubricating system with oil cooler, since there provided is a bypass valve for opening the bypass circuit when an oil pressure in the oil cooler drops to a fixed value or over, the oil can be fed pneumatically to the lubrication circuit through the oil cooler when the outside temperature is high and thus the oil pressure drops little, or without passing through the oil cooler but by opening the bypass valve at the time of cold season where the oil pressure considerably drops, thus securing the effect that the lubrication circuit can be lubricated and cooled as well efficiently covering full temperature limits. Further, since the oil will be flowed through a series circuit, a small-sized oil pump is available, and a power loss can be minimized.


BRIEF DESCRIPTION OF THE DRAWINGS


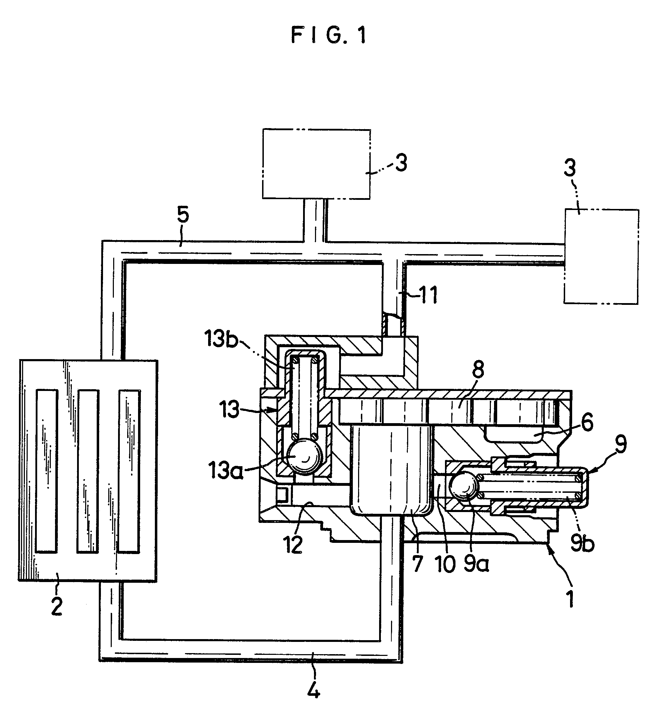

Fig. 1 is a circuit diagram of a forced-feed lubricating system with oil cooler relating to the invention; Fig. 2 is a system diagram of a prior art forced-feed lubricating system; Fig. 3 is a circuit diagram representing an example of improved prior art forced-feed lubricating system; Fig. 4 is an oil hydraulic circuit diagram suggesting an application to a conventional cooling apparatus.


DETAILED DESCRIPTION OF THE INVENTION


The invention will now be described with reference to the accompanying drawings representing a preferred embodiment thereof.

In Fig. 1, a reference numeral 1 denotes an oil pump body, 2 denotes an oil cooler, 3, 3 denote lubrication circuits including, for example, transmission gear and bearing part oil discharged from the oil pump body 1 is fed pneumatically to the oil cooler 2 through a first piping 4, cooled down therein and is then further fed pneumatically to the lubrication circuits 3, 3 through a second piping 5.

An inside port 6 and an outside port 7 are provided independently each other within the oil pump body 1, and a pump part (or trochoid pump) 8 communicating with the inside port 6 and the outside port 7 is provided. The oil recovered by the lubrication circuit 3 through an oil strainer which is not illustrated is sucked in the inside port 6, pressurized at the pump part 8 to flow into the outside port 7, and is further discharged to the first piping 4 therefrom. A relief valve 9 communicating with the outside port 7 is provided on the oil pump body 1. The relief valve 9 is provided so as to prevent a failure of the oil pump body 1 when pressure in the first and second pipings 4, 5 rises for some cause or other, and is provided with a ball valve 9a for operating a hole 10 through which the outside port 7 communicates externally and a spring 9b for energizing the ball valve 9a normally to a close valve side.

Then, the oil pump body 1 and the second piping 5 are connected with a bypass piping 11. On the other hand, a bypass passage 12 through which the bypass piping 11 and the outside port 7 communicate with each other is provided in the oil pump body 1, and a bypass valve 13 is interposed in the passage 11. The bypass valve 13 is provided with a ball valve 13a for operating the bypass passage 12 and a spring 13b for energizing the ball valve 13a normally to a close valve side.

Here, a working pressure $P_1$ of the bypass valve 13, namely a force to open the ball valve 13a against a force of the spring 13b is set to be equal to a predetermined value $P_2$ of pressure drop (differential pressure between oil pressure in the first piping 4 and oil pressure in the second piping 5) in the oil cooler 2 which is determined on viscosity of the oil. The set value $P_2$ indicates a critical point whereat the lubricating performance deteriorates from a decrease in the quantity of oil passing through the oil cooler 2 according to an increase in oil viscosity, therefore when the outside temperature drops and the oil viscosity increases, and thus a pressure drop in the oil cooler 2 becomes greater than the set value $P_2$ or the working pressure $P_1$ of the bypass valve 13, the ball valve 13a of the bypass valve 13 opens against a force of the spring 13b, the bypass passage 12 and the bypass piping 11 (bypass circuit) are opened, and thus most of the oil discharged from the outside port 7 comes to flow to the lubrication circuit 3 by way of the bypass circuit.

According to such construction, since the oil viscosity is small and the pressure drop in the oil cooler 2 is less than the set value $P_2$ when the outside temperature is high, the bypass valve 13 remains closed and the oil is guided to the oil cooler 2 through the first piping 4, fed pneumatically to the lubrication circuits 3, 3 further from the second piping 5, thus working for desired lubrication and cooling. On the other hand, at the time of cold season when the outside temperature drops, the oil viscosity increases and a pressure drop in the oil cooler 2 becomes greater than the set value $P_2$, therefore the bypass valve 13 opens and most of the oil is guided directly to the second piping 5 from the bypass passage 12 and the bypass piping 11, and is fed pneumatically to the lubrication circuits 3, 3 therefrom to a desired lubricating operation.

Meanwhile, a working pressure of the bypass valve 13 is set to be less than a working pressure of the relief valve 9.

## Claims

(1) A forced-feed lubricating system with oil cooler for feeding oil discharged from an oil pump pneumatically to a lubrication circuit after cooling in an oil cooler, characterized in that an oil inlet and an oil outlet of the oil cooler are connected with a bypass circuit, a bypass valve adapted to open when an oil pressure in the oil cooler drops to a fixed value or below, is interposed in the bypass circuit.

(2) The forced-feed lubricating system with oil cooler as defined in claim (1), wherein the oil is circulated.

(3) The forced-feed lubricating system with oil cooler as defined in claim (1), wherein a gear pump is used as the oil pump.

(4) The forced-feed lubricating system with oil cooler as defined in claim (3), wherein the gear pump is a trochoid pump.

(5) The forced-feed lubricating system with oil cooler as defined in claim (1), wherein the bypass circuit is provided through an oil pump body.

(6) The forced-feed lubricating system with oil cooler as defined in claim (1) or (5), wherein the bypass valve is incorporated in the oil pump body.

(7) The forced-feed lubricating system with oil cooler as defined in claim (1), wherein the bypass valve has a ball valve and a spring for energizing the ball valve in the direction close normally

# F I G. 1

F I G. 2

F I G. 3

# F I G. 4